# EUROPEAN PATENT SPECIFICATION

(11) **EP 2 572 165 B1**
(45) Date of publication and mention of the grant of the patent: **29.11.2017**
(21) Application number: 10754427.2
(22) Date of filing: 08.09.2010
(51) Int. Cl.: G01D 4/00, G01R 31/02

(54) **APPARATUS, METHOD, AND COMPUTER SOFTWARE FOR DETECTION OF TOPOLOGY CHANGES IN ELECTRICAL NETWORKS**
VORRICHTUNG, VERFAHREN UND COMPUTERSOFTWARE FÜR DEN NACHWEIS VON TOPOLOGIEÄNDERUNGEN IN ELEKTRISCHEN NETZWERKEN
APPAREIL, PROCÉDÉ ET LOGICIEL INFORMATIQUE POUR DÉTECTER DES CHANGEMENTS TOPOLOGIQUES DANS DES RÉSEAUX ÉLECTRIQUES

(43) Date of publication of application: 27.03.2013
(73) Proprietor: Siemens Aktiengesellschaft, 80333 München (DE)
(72) Inventor: BAMBERGER, Joachim, 82152 Krailling (DE); HOFFMANN, Clemens, 91074 Herzogenaurach (DE); METZGER, Michael, 85570 Markt Schwaben (DE); OTTE, Clemens, 81739 München (DE)
(86) International application number: PCT/EP2010/005506
(87) International publication number: WO 2012/031613

(56) References cited:
- WO-A1-2007/005547
- WO-A1-2007/027086
- WO-A1-2009/061291
- WO-A2-2009/155014
- US-A- 4 491 785

## Description

### FIELD OF THE INVENTION

The present invention relates generally to method of detection of topology changes in electrical networks, and relates particularly, but not exclusively to a method for detection of topology in electrical networks, an electrical network communication modem and computer program for monitoring an electrical network topology model for network control.

### BACKGROUND OF THE INVENTION

WO 2007/027086 A1 discloses a method for determining a network structure or layout of at least a part of an electricity transport network, for instance a low voltage part of this network extending in a city. The method comprises: providing a test signal to the network at at least a first network location; and verifying whether said test signal, which has been provided to the first network location, reaches at least a second network location, in particular utilizing at least one detector. Further, a system for determining a network structure or layout of at least a part of an electricity transport network is disclosed.

While distributed power generation (DPG) from renewable energy resources is seen as a key element of future energy supply, currently existing electricity grids are not designed to integrate a steadily increasing share of distributed generators. The hierarchical network topology employed in the majority of networks today was designed either for unidirectional power flows and/or passive operation. Therefore, in order to accommodate the addition in the current electricity grids of power generation and in order to avoid excessively expensive grid reinforcements, new solutions for active grid operation are necessary.

To fulfil the ever increasing energy generation needs and targets a further increased deployment of distributed power generation (DPG) based on renewable sources (RES) is required. However, high penetration levels of DPG are currently limited by the characteristics of the passively operated distribution systems. From a historical perspective the distribution network was designed to supply end users (loads) and not to connect generators. Common passive networks are operated based on a unidirectional power flow from the high voltage level of the transmission network with central generation units to the distribution network and to the consumers at the low voltage levels.

At higher penetration levels of DPG the former purely passive distribution system becomes active and the unidirectional flow changes to a bidirectional load flow. However, this development is usually not reflected when it comes to network operation, since in most cases DPG is simply seen as a negative load. Real active operation means that generation, the network and consumption (loads) within the distribution system actively interact and adapt each other according to the actual load flow situation.

The conversion of networks from passive to active operation introduces many challenges considering DPG network integration, power quality, concepts and strategies for network planning, control and supervision as well as information and communication technologies.

In future power distribution networks more and more decentralized and fluctuating power generation components will be connected. Before the energy flow was purely from centralized power plants via high voltage transmission lines towards the consumers in medium/low voltage distribution networks. In the future, the direction of energy flow is expected to change and this has impact on the network operation, and the limits of voltage and currents will be exceeded.

To meet and solve the above challenges intelligent power network control mechanisms have been suggested. However, these control mechanisms often rely on models built relying on the known power network structure and its parameters. In consequence, the network topology and the network parameters must be known to apply the intelligent control mechanism.

However, especially in older distribution networks, the parameters of the network, such as cable types, length and topology, are often not exactly known or only known in parts of the network. Furthermore, the network topology can change suddenly, by manually opening and closing of switches that connect/disconnect parts of the network.

The identification of the network model via measurement of its line impedances, even in the case of known network topology, is difficult. The measurement of the node voltages by an absolute voltage measurement device is insufficient, because the voltage differences between nodes are needed to calculate the line impedances. These are small and therefore the necessary measurement resolution and accuracy of the measurement units are too high for a practical system realization.

Another possibility is the direct measurement of the voltage difference between nodes. This solution involves the installation of a separate measurement network, and is therefore expensive.

Therefore, a need still remains for other solutions that enable efficient control and supervision, diagnosis and protection of the power network.

### BRIEF SUMMARY OF THE INVENTION

This is achieved by the features of the independent claims.

Compared to other solutions offered in the art, the solution provided by the present invention makes use of channel estimation measurements of power line communication devices in order to detect changes in the topology of the electrical network, facilitates the detection of changes in the topology of the network by using existing infrastructure in a new way, and permits the easy classification of possible network topology/parameter changes. The adaptation of the system model or configuration parameters of a network controller, the monitoring, the diagnosis and the protection of the network are as well facilitated by the means and methods of the present invention by means of network simulation.

Other characteristics and advantages of the present invention will be apparent in connection with the dependent claims.

### BRIEF DESCRIPTION OF THE FIGURES

The present invention together with the above and other objects and advantages may best be understood from the following detailed description of the preferred embodiments of the invention illustrated in the drawings.
FIG. 1 illustrates an exemplary power network topology with renewable energy sources.
FIG. 2 illustrates an exemplary impulse result of measurement and echo model for a multi-path condition.
FIG. 3 portrays a change of an opened ring distribution network.
FIG. 4 illustrates a power station in accordance with an embodiment of the present invention.
FIGs. 5A and 5B illustrate a power density spectrum in the power station of Fig. 4.
FIG. 6 illustrates a configuration in which the couplers are installed alternating before/behind switches, in accordance with an embodiment of the present invention.
FIG. 7 is a representation of the power spectral density measured in connection with an embodiment of the present invention.
FIG. 8 illustrates a flow chart representing the method of the present invention;
FIG. 9 is a schematic representation of the electrical network communication modem in accordance with the present invention.

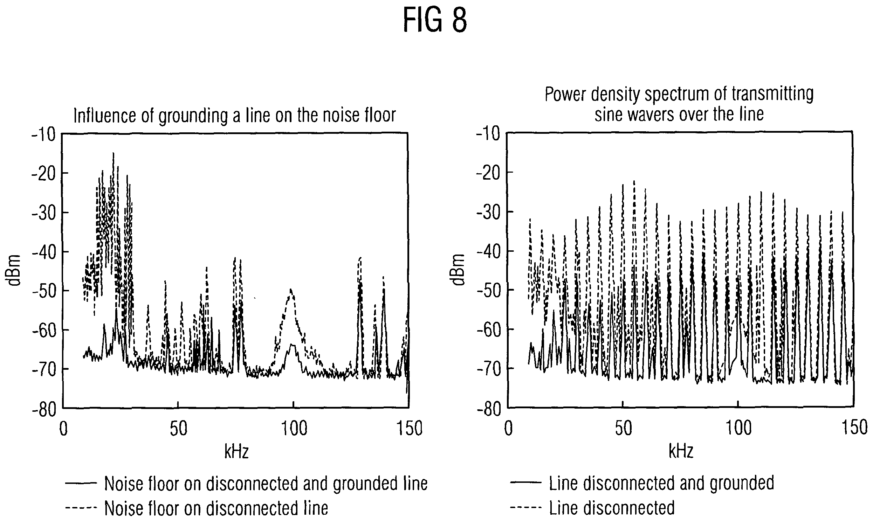

In Fig. 8 the order of description should not be construed as to imply that these operations are necessarily order-dependent.

Non-limiting and non-exhaustive embodiments of the present invention are described with reference to the above referenced figures, wherein like reference numerals refer to like parts throughout the various views unless otherwise specified. The order of description should not be construed as to imply that these operations are necessarily order-dependent.

### DETAILED DESCRIPTION OF THE INVENTION

Embodiments of a method for detection of topology changes in electrical networks, of the electrical network communication modem, and of a computer program product, loadable in the electrical network communication modem or loadable in the microcontroller of a separate device are described herein.

In the following description, numerous specific details are provided for understanding the embodiments of the present invention. One skilled in the relevant art will recognize, however, that the invention can be practiced without one or more of the specific details, or with other steps, methods, systems, components, materials, etc. In other instances, well-known structures, materials, system components, or steps of methods are not shown, or if shown are not described in detail, to avoid obscuring aspects of the invention.

Reference throughout this specification to "one embodiment" or "an embodiment" means that a particular feature, structure, step, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, steps, or characteristics may be combined in any suitable manner in one or more embodiments.

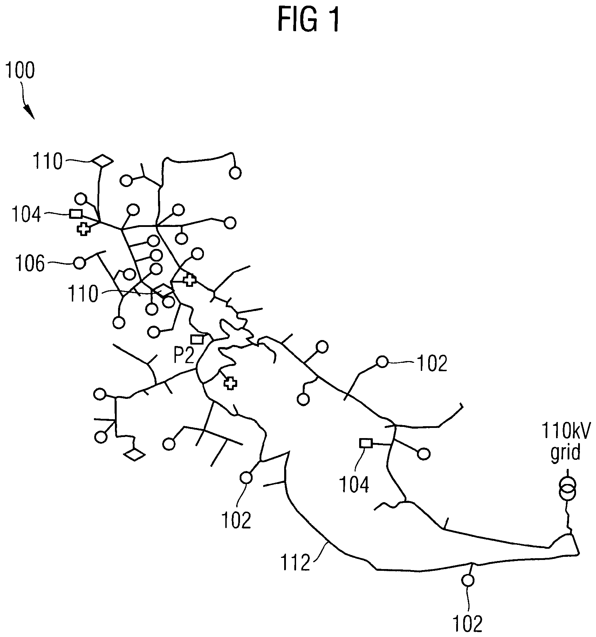

Referring now to FIG. 1, the figure illustrates an exemplary power network topology 100 with renewable energy sources.

As it may be observed in figure 1, a plurality of renewable energy sources 102, 104, 106, 108 such as hydro, photovoltaic, new distributed energy generation plants feed into the exemplary network configuration 100. On the other hand, a plurality of consumers is as well present, imparting varying loads 110 onto the various power flow paths of the exemplary network. Essentially each one of the illustrated components of the exemplary power network 100 is a decentralized and fluctuating power generation or power consumption component connected into the exemplary network 100. A factor that further complicates the study and control a network like the one illustrated in Fig. 1 is that its topology may change suddenly, due to manually opening or closing switches disposed on various branches 112 of the network. The network 100 may as well change topology suddenly when an undesirable event such as line grounding takes place.

In accordance with an embodiment of the present invention a power network 100 such as the exemplary power network of Fig. 1 may be studied with the aid of channel estimation via communication realized using the power line.

The area communications via power lines has been studied in the past to perform channel estimation for the purpose of optimization of data links. By channel estimation is understood the determination of a complex transfer function, or the channel impulse response, of a communication channel. The physical media used is the electrical power network.

Communication devices are able to perform signal measurements to estimate the properties of the communication channel and therefore to perform channel estimation. This is needed for signal encoding and decoding. The properties of the communication channel may be obtained via modelling and simulation.

In a power grid the communication signal is affected heavily by reflections at branches or changes in the line impedances.

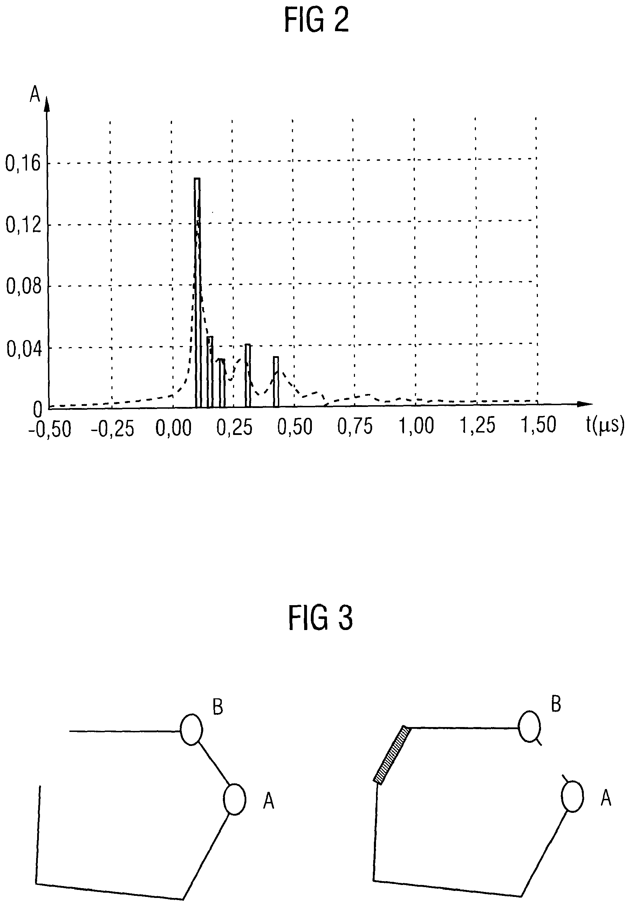

Furthermore the signal may travel along on different paths between two nodes, included for example in a ring topology. These effects result in an impulse response with several peaks, as illustrated in Fig. 2.

Fig. 2 illustrates an exemplary impulse result of measurement and echo model for a multi-path condition.

For a multi-path condition the measured impulse response illustrated in Fig. 2 shows a first incoming pulse from the signal on the shortest path and one or more delayed pulses. The echo-pulses can also be used to identify the properties of the echo-paths, such as their length, and damping of the other signal path. Together with other information, such as a priori information about the network topology and/or measurements from other devices, the geometry and other parameters of the electrical network may by identified.

In special cases, where the network topology changes suddenly, the model employed for the description of the network needs to be keep up with the changes of the network and to change automatically. This is often not possible, because most changes cannot be foreseen, changes such as failures of the network or changes introduced by manual switching events. The inability to respond to sudden changes is one of the significant drawbacks of the solutions proposed employed in the art for the description of power networks.

The measurements may be performed preferably with unmodulated carrier signals, as well as pulse signals. More complex signals such as chirp, OFDM, broadband signals may as well be employed.

Although not the major focus of the measurements, most measurements also perform testing for path loss and noise. For this purpose, a signal generator provides a sine wave which is sequentially swept across a frequency range, typically one of the following: 9 kHz to 150 kHz (CENELEC, narrow band), 0 to 500 kHz (extended narrow band), and 1 MHz to 30 MHz (broadband).

The generated signals are coupled into different medium voltage lines. At the receiving side the signals may be coupled out from the medium voltage (MV) line and processed by a spectrum analyzer or oscilloscope. Coupling devices of different types (inductive and capacitive) and brands may be employed.

A key question addressed by the present invention is to show how power line communication (PLC) measurements can be used to derive information about the network itself. In particular, the recognition of changes in the topology of the MV network caused by opening/closing switches and the detection of short-circuits in the network are two major objectives.

The measurements reveal that the state of a single switch is clearly detectable if the switch is in the communication path: an open switch in the path increases the attenuation in the range 1 MHz to 5 MHz for example by at least 30 dB and this change in the power spectral density clearly identifies the switch state.

Measurements may also consider the effect of a switch outside the communication path, for example, by disconnecting a 10 km or 30 km segment of the network. The resulting changes in the power spectral density depend on the considered line and also on the type of coupler. In total, recognizing the state of a switch outside the communication path is considerably more complex.

The effects of grounding a line can also be observed by studying the measured spectrum on the line of approximately 4000 m which was first disconnected from medium voltage and then grounded. The grounding has a clearly observable impact on the spectrum by significantly reducing the noise floor. Short-circuits on a line that is still connected to medium voltage can also be detected by observing changes in the spectra. This observation provides a solution for the detection of short-circuits via employing communication signals via power lines.

To summarize, the measurements of the present invention can be conducted to assess the basic suitability of medium voltage distribution networks for data communication purposes, for the purposes of evaluating possible range of communication and crosstalk, and to derive status data from the network itself, such as detection of switch states or short circuits, under typical operational conditions.

In order to measure the network characteristics or to test the properties for data communications various test signals have been inserted into different MV segments through coupling devices. Coupling devices of different brands and based on different technologies (capacitive and inductive) may be used. All couplers employed are passive devices and can be used for coupling into the MV line as well as coupling out of the line. For the measurements performed unmodulated carrier signals (sine wave, carrier wave CW) as well as pulse signals have been used. More complex signals (e. g. chirp, OFDM, broad band signals) may as well be used. For the determination of the characteristics of the medium voltage network itself, the attenuation of CW signals can be measured as well as the propagation of some pulse signals. Most measurements consider the testing of path loss and noise. For this purpose, a signal generator or a modem for power line communication can provide a sine wave which is sequentially swept across a frequency range, typically one of the following ranges: 9 kHz to 150 kHz (CENELEC, narrow band, 10 kHz steps, optional 5 kHz, 0 to 500 kHz (extended narrow band, 10 kHz steps, optional 5 kHz, 1 MHz to 30 MHz (broadband 1 MHz steps, optional 500 kHz). The following types of measurements can be conducted in possible embodiments to derive the information required:

For all three frequency ranges (narrow band, extended narrow band, broadband) the attenuation of coupling-in from the 50 Ohm BNC input into the MV power line and of coupling-out from the MV power line to the 50 Ohm BNC output may also be investigated for different coupler types via the methods and means proposed by the present invention.

For all three frequency ranges (narrow band, extended narrow band, broadband) the noise floor (total sum of all noise sources including disturbing signals) can also be investigated for different coupler types via the methods and means proposed by the present invention. Only parts of the frequency spectrum where the noise level is below the signal level that is permitted to be inserted can be used for measurement or data communication signals. The signal-to-noise ratio curve across the frequency band of usage determines the signal quality and performance for the measurement or communication (bit error rate, data rate).

For all three frequency ranges (narrow band, extended narrow band, broadband) the attenuation of a CW signal on the power line can also be investigated for different coupler types via the methods and means proposed by the present invention. Different types of lines (underground, overhead) and line lengths may be used.

For all three frequency ranges (narrow band, extended narrow band, broadband) the attenuation of a CW signal through the following constellations may also be investigated for different coupler types via the methods and means proposed by the present invention. In addition, via the methods and means proposed by the present invention information may also be derived regarding the phase line to phase line, closed versus open power switches, and the different load conditions in the power network.

As mentioned above, the solution proposed by the present invention can be applied to detect the network topology change online and modify the system model, which constitutes the base model for the controller. In connection with this solution the channel estimations of all or a part of the existing communication channels have to be monitored, and the topology change may be detected. Based on the channel measurements the event that caused the topology change can be classified. The event may for example be the opening of a ring at a coupling station and the closing at another other one.

Based on knowledge regarding the new topology the system model is calculated, using for example means of network simulation techniques. The controller can use the new model and is adapted to the new situation.

In accordance with the present invention the channel estimations of the communication devices are used to determine the characteristics of the power network that are relevant for the control of the power network.

A significant change in the topology in the power grid, such as the disconnection of a house by a protection event, or the opening of a distribution ring can be observed easily via the change in the channel impulse responses of the communication devices in the reception range of the event. In the following, figure 3 illustrates a change of an open ring distribution network, which is a common event in distribution networks.

As illustrated in Fig. 3, on the left side, a direct connection exists between nodes A and B, while on the right side the ring is opened between the nodes A and B, and closed on the other side. The direct connection from node A to node B no longer exists.

If the correlation between the above referred to opening and closing events is evaluated versus a behavior illustrated in Fig. 2, it is noted that a first peak of the impulse response will disappear, another peak will occur with a greater delay and damping. But the simple monitoring of the communication line by sending alive messages is not enough to detect this change, because after the change the communication is as well possible, of course depending upon the frequency range of the signal employed, as it will be described later in greater detail in the present document. For this application, the monitoring of the signal damping is desirable / feasible, a more detailed view at the signal reflections allowing determining the location of the break more accurately.

Detecting the state of a switch SW (open/closed) exploits the physical effect that an open switch in the communication path strongly attenuates low-frequency signals, e.g. signals with frequencies lower than 5 MHz.

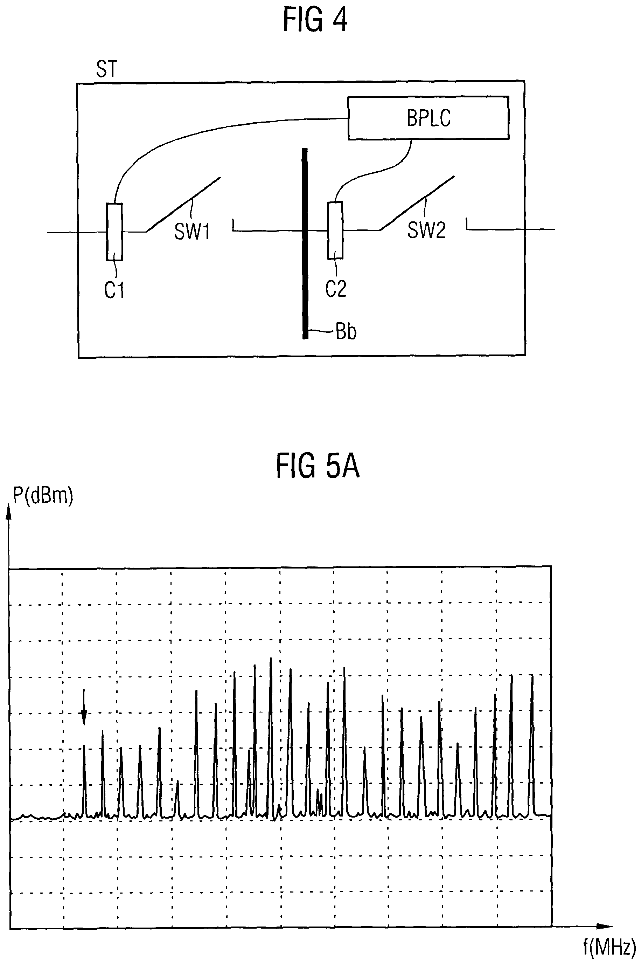

The present invention may be illustrated in connection with an embodiment of a power station that comprises, as illustrated in Fig. 4, a plurality of couplers C1 and C2. A plurality of switches S1 and S2 may be disposed between the couplers C1 and C2, in the embodiment illustrated in Fig. 4 the switches S1, S2 being in opened position. Via a modem for broadband power line communication or alternatively via a wave signal generator, a high frequency communication signal is fed into the couplers. The couplers are connected to the modem for broadband power line communication, for example, via a coaxial cable. Also illustrated in figure 4 is a busbar that is capable of collecting the voltage from several other lines.

The coupler types used are inductive and/or capacitive. Additionally, inductive shield couplers may be used.

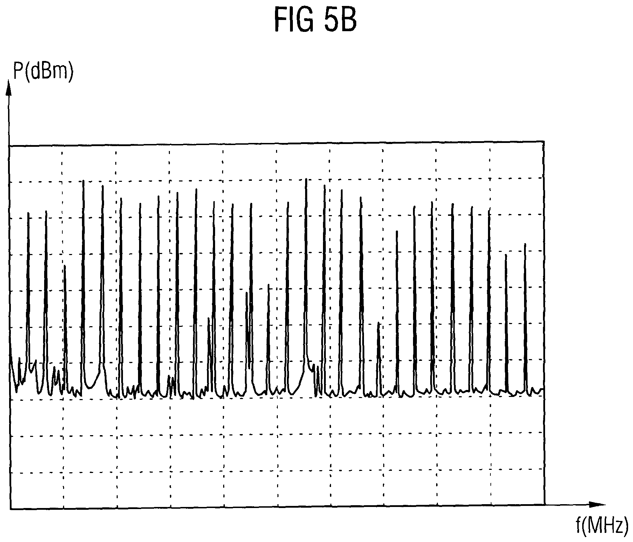

A power density spectrum showing the received power per frequency for a communication from coupler C2 to coupler C1 across the busbar and closed or opened switch S1 was measured. Said power density spectrum is illustrated in Figs. 5A and 5B, indicating therefore whether the switches are either closed or opened.

The following refers to an exemplary implementation where the following equipment may be used:
Signal Generator: Agilent 33250A, 80 MHz Arbitrary Waveform Generator;
Spectrum Analyzer: Rhode & Schwarz FSEB, Spectrum Analyzer 20 Hz ... 7 GHz;
Oscilloscope: Tektronix DPO 7254, Digital Phosphor Oscilloscope, 2.5 GHz, 40 GS/s. A person skilled in the art will be aware of alternative implementations for the circuitry of Fig. 4.

The signals (CW with various frequencies, pulse with various on/off timing) are created by a wave signal generator with 50 Ohm output. The generator can be connected to the 50 Ohm input of the coupling-in device via a 10 m coaxial cable (50 Ohm, RG-58/U). For most of the measurements the coupling in device and the coupling-out device are mounted on the same phase line (e. g. L1) of the line triple at opposite ends of a line segment. The coupling-out device (50 Ohm output) delivers the out-coming signal again via 10 m coaxial cable (50 Ohm, RG-58/U) to the measurement equipment (memory oscilloscope and spectrum analyzer). The attenuation of the signal inside the coaxial cable can be neglected for the frequency range investigated (0 - 30 MHz; RG-58/U attenuation: 0.13 dB/10 m @ 500 kHz, 0.85 dB/10 m @ 30 MHz).

The signals may as well be created by a modem for broadband power line communication BPLC that inputs a communication signal with high frequency.

Most measurements considered the recording of a power spectral density, which describes how the power of a signal is distributed with the frequency. For that purpose, the signal generator provides a sine wave with a certain frequency and peak-to-peak voltage (Vpp). The voltage can typically be fixed at 1 Vpp. In certain cases where a high attenuation can be expected (e.g. transmitting over an open switch or a long line segment) the voltage is increased to 10 Vpp in order to receive a more definite power spectral density at the spectrum analyzer (note that 10 Vpp is too high for real communication purposes). The sine frequency of the signal generator can be manually set and each time held for about 3 seconds before it is increased to the next frequency, e.g. in steps of 5 kHz or 500 kHz.
The sine wave is coupled into the line by one of the couplers C at the transmitting site, transmitted over the line (or busbar) and coupled out at the receiving site using another coupler connected to the spectrum analyzer. The spectrum analyzer records the power spectral density with activated max-hold function which stores the maximum power level per frequency for the duration of the complete measurement.

Figs. 5A and 5B show the power spectral density (PSD) plots measured specifically in a 30 kV medium voltage power distribution network. The plots show the received power in dBm over the frequency range from 1 MHz to 30 MHz for transmissions of sine waves over a closed or open switch. Each peak in the PSD plots corresponds to the received power at a certain frequency of a sine wave (the frequency can be varied in certain steps between 1 MHz and 30 MHz). In the case of the open switch the range below 5 MHz shows a strong attenuation of 30-40 dB. Therefore, the state of a single switch SW in the communication path can be clearly detected by measuring the received power at frequencies below a certain frequency (here: 5 MHz).

If there is a plurality of switches SW in the communication path then a strong attenuation of low-frequency signals (e.g. lower than 5 MHz) indicates that at least one of them is open; however, it is usually not possible to uniquely identify which of them is/are open.

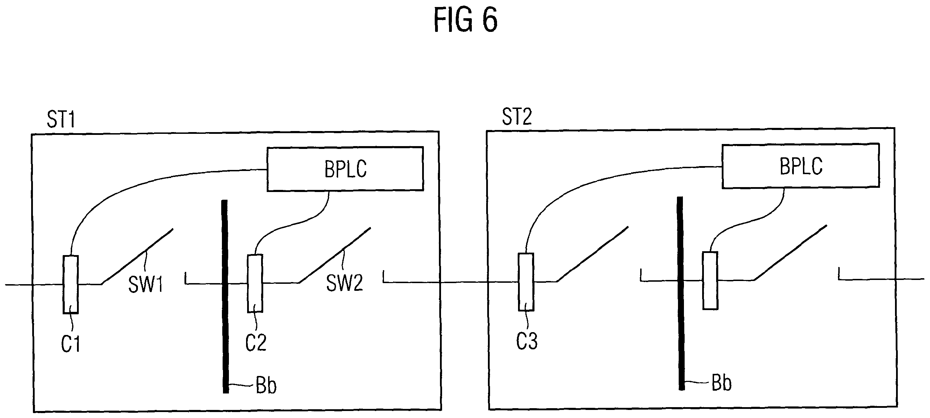

At least the states of the most relevant switches SW in the network should be reliably detectable for each individual switch SW. This is achieved by installing the couplers C before and behind the relevant switches SW in a way that for each relevant switch SW there is a communication path in which the respective switch SW is the only one. Such a configuration in which the couplers C are installed alternating before/behind switches is illustrated in Fig. 6.

High frequencies (e.g. greater than 10 MHz) can typically pass a single open switch SW. In figure 5A, high-frequency communication between stations ST1 and ST2 may therefore still be possible with switch SW2 open if the power line between both stations ST1, ST2 does not attenuate too strongly. For example, measurements in the medium voltage network show that communication is possible in that case if the line consists of a typical 500 m long underground 30 kV cable.

If the combined attenuation of the line and the open switch is so strong that communication between stations ST1 and ST2 is impossible with switch SW2 open, then an additional coupler needs to be installed as shown in Figure 6 (assuming that communication is still desired with SW2 open; some network operators do not want to communicate over an open switch).

In summary, a method for detecting the switch states by means of power line communication PLC in accordance with the present invention, and as such detecting the topology changes in an electrical network 100, comprises at least the following steps:
Signals are coupled-into the power line or busbar Bb via a transmitting coupler on one side of the switch SW. The frequencies of the signals are chosen so that the signals are strongly attenuated by an open switch (e.g. below 5 MHz for typical 30 kV switches). Dedicated test signals like sine waves or usual communication signals are used.
On the other side of the switch SW the signals are coupled-out of the network 100 via a receiving coupler and the power level of the received signal is measured at one or more frequencies. Ideally, the transmitting and receiving couplers are located in a way that for each (relevant) switch SW there is a communication path in which the switch SW is the only one.
An algorithm, exemplarily residing on a microcontroller, analyzes the received power level and outputs the switch state. In the simplest form it just reads the received power level at a single fixed frequency from the range chosen in the first step and if the power level is below a certain fixed threshold then the algorithm outputs the information that the switch is open or otherwise closed. In a more elaborated form the algorithm analyzes the received power level at multiple frequencies (like a power spectral density analysis), optionally derives features from the curve like slope or shape of the curve, and uses a classification algorithm to output the state of the switch. Many known classification algorithms can be used (e.g. rule-based approaches, decision trees, support vector machines, neural networks, and partial least squares regression).
The information about the switch state is used to update a network topology model for network control (e.g. active voltage control). For this purpose the switch state information is usually propagated through the network 100, e.g. to send it to a network control center.
The described signal processing and analysis can be integrated in the power line communication modem (shown as BPLC boxes in the figures) or can be implemented on separate devices.

In a second embodiment of the present invention, the method of measuring the spectral density of the received power is applied to estimate the state of switches SW that are outside the communication path. Being outside the path their state cannot be exactly determined. However, the uncertainty about the switch state can be quantified in terms of a probability value. The probability value that a switch SW is in the closed or open state can be used for network control. For example, an active voltage control algorithm may switch to a less aggressive control regime if it knows that a certain switch SW is closed with 80% probability (less aggressive than in the case where the state is exactly determined). Currently, typically no information is available about the switch states at all, so even uncertain information can be an improvement for network control. The probabilities may also be combined in the control center with further information (e.g. state estimations of other switches, voltage measurements at certain nodes etc.) to improve the accuracy of the estimate.

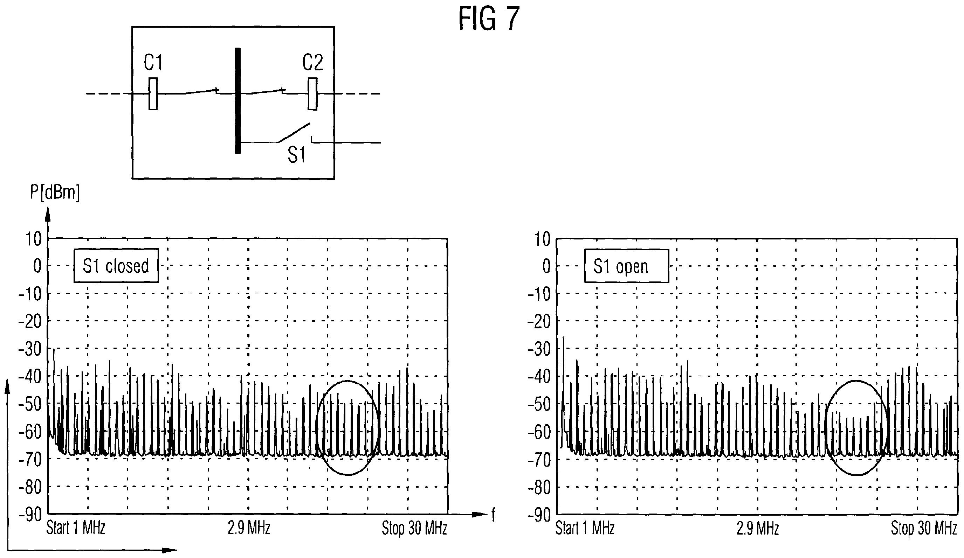

The physical effect exploited here is the fact that a changed switch state changes the impedance in the power network at least locally such as on the busbar Bb. The changed impedance leads to detectable changes in the power spectral density, as illustrated in Fig. 7. However, the changes depend on many factors, in particular on the load in the power network, so the switch state can only be inferred with the uncertainty mentioned above. The concrete changes in the power spectral density for the respective switches SW need to be determined empirically by performing calibration measurements. Based on these calibration measurements, where the switch states are known, a classification algorithm can be learned automatically. Several classification methods for spectral data, e.g. partial least squares regression, could be used for this purpose. The classification algorithm can read the power spectral density curve and/or features derived from that curve and output a probability value for the switch state.

In accordance with an embodiment of the present invention, measuring the spectral density of the received power can be used to verify a given topology model of the network 100 in terms of cable lengths. The attenuation of a cable is known to increase with the frequency, in accordance with the so called skin effect and the cable length. Measurements in a 30 kV network show that all frequencies above 7 MHz are cut-off for a certain line type and length. The communication characteristics of overhead lines are usually known. If this knowledge is formalized, in terms of rules or expected spectral density curves, the measured spectral density of the received power can be matched with the knowledge to verify the network topology model.

In accordance with another embodiment of the present invention, the means and method of the invention may also be used in connection with an application to network protection. Problems in electrical networks are caused by external influences, like short circuits by snow, trees, broken lines, or erroneous connected loads and generators.

The complex channel or the impulse response of a communication channels hold much information about the network topology and parameters. Therefore a significant and sudden change in the power network and its attached power components can lead to a significant change of the resulting channel impulse responses.

A tree causing a short circuit on a segment changes the channel dramatically. Significant signal reflections will occur caused by the new "branch", caused by the short circuiting tree on the line segment. The new peak in the impulse response can be detected by a comparison of the new impulse response with the previous one. Appropriate signal processing and filtering can be applied to reduce measurement noise and allow an accurate classification of the event.

A system can be built that collects the channel estimations/ impulse responses of a set of devices to monitor all or at least the important line segments. A mechanism for detection of changes and a classification of the error situation can be built using impulse response of a single line segment or using impulse responses of multiple segments.

The classifier can be extended to combine the channel estimation also with other information sources, e.g. like a bad weather report that increases the probability of fallen trees. After the network error state classification a system control and protection unit can take the necessary control action.

Fig. 8 shows the effects of grounding a line on the power spectral density. Note that in this measurement the line has firstly been disconnected from the medium voltage before it was grounded (connected to earth). The measurement is therefore not a fully realistic simulation of a (strong) short-circuit. Nevertheless, a short-circuit on a line under voltage could be expected to have a detectable impact on the power spectral density too.

Thus the spectral density measurements of the received power can be used for anomaly detection. In a training phase a condition monitoring system learns the statistical distribution of the measurements in different normal conditions (e.g. different load situations). In the deployment phase a significant deviation from the learned normal distributions can trigger an alarm, e.g. to identify and localize a short-cut in the power network.

The present invention is also directed to an electrical network communication modem. The electrical network communication modem comprises at least means for detecting topology changes in electrical networks, wherein a plurality of couplers C are installed in the electrical network 100. The couplers C are installed such that at least one switch is present on a communication path between two successive couplers C, and two successive couplers are a transmitting coupler and a receiving coupler. The means of detecting topology changes is capable of performing the steps of transmitting a signal generated via the transmitting coupler on the communication path between two successive couplers, measuring a received power at the receiving coupler via one of the power measurement devices, processing the signal received at the receiving coupler via one of the plurality of frequency analysis devices, deriving information regarding the state of the switch SW present on the communication path between two successive couplers, and
updating a network topology model for network control based on the desired state of the switch SW.
The present invention is as well directed to a computer program for monitoring an electrical network topology model for network control, the computer program residing on a computer, microcontroller or the like, the computer program updating a network topology model for network control based on a desired state of a switch. A plurality of couplers C are installed in the electrical network 100, the couplers being installed such that at least one switch SW is present on a communication path between two successive couplers C, and the two successive couplers C are a transmitting coupler and a receiving coupler. The computer program performing the steps of transmitting a signal generated via the transmitting coupler on the communication path between two successive couplers C, measuring a received power at that receiving coupler via one of the power measurement devices, processing the signal received at the receiving coupler via one of said plurality of frequency analysis devices, deriving information regarding a state of the switch SW present on the communication path between two successive couplers C, and updating a network topology model for network control based on the desired state of the switch.
The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.
These modifications can be made to the invention in light of the above detailed description. The scope of the invention is to be determined entirely by the following claims.

## Claims

1. A method for detection of topology changes in electrical networks (100), the electrical network (100) comprising a plurality of communication paths, a plurality of switches (SW) on the communication paths, a plurality of power measurement devices, and a plurality of frequency analysis devices, the method comprising the steps of:
installing a plurality of couplers (C) in said electrical network (100),
wherein said couplers (C) are installed such that at least one switch (SW) is present on a communication path between two successive couplers, and
wherein said two successive couplers (C) are a transmitting coupler and a receiving coupler,
transmitting a signal generated via said transmitting coupler on said communication path between two successive couplers and the signal having a frequency at which a change in the power spectral density identifies a state of said switch (SW) ;
measuring a received power at said receiving coupler via one of said power measurement devices;
processing said measured power signal received at said receiving coupler via one of said plurality of frequency analysis devices,
deriving information regarding the state of said switch (SW) present on said communication path between two successive couplers (C), wherein the state of the switch (SW) in the communication path is detected by measuring the received power at frequencies below the frequency of the transmitted signal, and
updating a network topology model for network control based on the derived information regarding the state of the switch (SW).

2. The method according to claim 1, wherein said signal generated by said transmitting coupler comprises an unmodulated carrier signal or a pulse signal.

3. The method according to claim 1,
wherein said couplers (C) are connected to an electrical network communication modem.

4. The method according to claim 1,
wherein a frequency of said transmitted signal is such that the signal is strongly attenuated by an open switch (SW).

5. The method according to claim 1,
wherein said electrical network (100) is formed by an electrical power network.

6. An electrical network communication modem, comprising:
means for detecting topology changes in electrical networks, wherein a plurality of couplers (C) are installed in said electrical network (100),
wherein said couplers (C) are installed such that at least one switch (SW) is present on a communication path between two successive couplers, and
wherein said two successive couplers are a transmitting coupler and a receiving coupler,
said means of detecting topology changes are configured to perform the steps of transmitting a signal generated via said transmitting coupler on said communication path between two successive couplers and the signal having a frequency at which a change in the power spectral density identifies a state of said switch (SW) ;
measuring a received power at said receiving coupler via one of said power measurement devices;
processing said measured power signal received at said receiving coupler via one of said plurality of frequency analysis devices,
deriving information regarding the state of said switch (SW) present on said communication path between two successive couplers, wherein the state of the switch (SW) in the communication path is detected by measuring the received power at frequencies below the frequency of the transmitted signal, and updating a network topology model for network control based on the derived information regarding the state of the switch (SW).

7. The electrical network communication modem according to claim 5,
wherein said couplers comprise inductive couplers or
capacitive couplers.

8. A computer program adapted to perform the method according to any of claims 1 to 5.

## Patentansprüche

1. Verfahren zur Erkennung von Topologieänderungen in elektrischen Netzen (100),
wobei das elektrische Netz (100) mehrere Kommunikationswege, mehrere Schalter (SW) auf den Kommunikationswegen, mehrere Leistungsmesseinrichtungen und mehrere Frequenzanalyseeinrichtungen umfasst,
wobei das Verfahren die folgenden Schritte umfasst:
Installieren mehrerer Koppler (C) in dem elektrischen Netz (100),
wobei die Koppler (C) derart installiert werden, dass wenigstens ein Schalter (SW) auf einem Kommunikationsweg zwischen zwei aufeinander folgenden Kopplern vorhanden ist, und
wobei die zwei aufeinander folgenden Koppler (C) ein sendender Koppler und ein empfangender Koppler sind,
Senden eines Signals, das durch den sendenden Koppler erzeugt wird, auf dem Kommunikationsweg zwischen zwei aufeinander folgenden Kopplern, wobei das Signal eine Frequenz aufweist,
bei welcher eine Änderung des Leistungsdichtespektrums einen Zustand des Schalters (SW) identifiziert;
Messen einer empfangenen Leistung an dem empfangenden Koppler durch eine der Leistungsmesseinrichtungen;
Verarbeiten des Signals der gemessenen Leistung, das an dem empfangenden Koppler empfangen wird, durch eine der mehreren Frequenzanalyseeinrichtungen,
Ableiten von Informationen hinsichtlich des Zustands des Schalters (SW), der auf dem Kommunikationsweg zwischen zwei aufeinander folgenden Kopplern (C) vorhanden ist, wobei der Zustand des Schalters (SW) in dem Kommunikationsweg erkannt wird, indem die empfangene Leistung bei Frequenzen unterhalb der Frequenz des gesendeten Signals gemessen wird, und Aktualisieren eines Modells der Netztopologie zur Netzsteuerung basierend auf den abgeleiteten Informationen hinsichtlich des Zustands des Schalters (SW).

2. Verfahren nach Anspruch 1,
wobei das Signal, das von dem sendenden Koppler erzeugt wird, ein unmoduliertes Trägersignal oder ein Impulssignal umfasst.

3. Verfahren nach Anspruch 1,
wobei die Koppler (C) mit einem Kommunikationsmodem für elektrische Netze verbunden sind.

4. Verfahren nach Anspruch 1,
wobei eine Frequenz des gesendeten Signals so beschaffen ist, dass das Signal durch einen offenen Schalter (SW) stark gedämpft wird.

5. Verfahren nach Anspruch 1,
wobei das elektrische Netz (100) von einem Stromversorgungsnetz gebildet wird.

6. Kommunikationsmodem für elektrische Netze, welches umfasst:
Mittel zum Erkennen von Topologieänderungen in elektrischen Netzen, wobei mehrere Koppler (C) in dem elektrischen Netz (100) installiert sind,
wobei die Koppler (C) derart installiert sind, dass wenigstens ein Schalter (SW) auf einem Kommunikationsweg zwischen zwei aufeinander folgenden Kopplern vorhanden ist, und
wobei die zwei aufeinander folgenden Koppler ein sendender Koppler und ein empfangender Koppler sind,
wobei die Mittel zum Erkennen von Topologieänderungen dafür ausgelegt sind, die folgenden Schritte auszuführen:
Senden eines Signals, das durch den sendenden Koppler erzeugt wird, auf dem Kommunikationsweg zwischen zwei aufeinander folgenden Kopplern, wobei das Signal eine Frequenz aufweist,
bei welcher eine Änderung des Leistungsdichtespektrums einen Zustand des Schalters (SW) identifiziert;
Messen einer empfangenen Leistung an dem empfangenden Koppler durch eine der Leistungsmesseinrichtungen;
Verarbeiten des Signals der gemessenen Leistung, das an dem empfangenden Koppler empfangen wird, durch eine der mehreren Frequenzanalyseeinrichtungen,
Ableiten von Informationen hinsichtlich des Zustands des Schalters (SW), der auf dem Kommunikationsweg zwischen zwei aufeinander folgenden Kopplern vorhanden ist, wobei der Zustand des Schalters (SW) in dem Kommunikationsweg erkannt wird, indem die empfangene Leistung bei Frequenzen unterhalb der Frequenz des gesendeten Signals gemessen wird, und
Aktualisieren eines Modells der Netztopologie zur Netzsteuerung basierend auf den abgeleiteten Informationen hinsichtlich des Zustands des Schalters (SW).

7. Kommunikationsmodem für elektrische Netze nach Anspruch 5, wobei die Koppler induktive Koppler oder kapazitive Koppler umfassen.

8. Computerprogramm, das dafür eingerichtet ist, das Verfahren nach einem der Ansprüche 1 bis 5 auszuführen.

## Revendications

1. Un procédé de détection de modifications de topologie dans des réseaux électriques (100),
le réseau électrique (100) comprenant une pluralité de trajets de communication, une pluralité de commutateurs (SW) sur les trajets de communication, une pluralité de dispositifs de mesure de puissance et une pluralité de dispositifs d'analyse de fréquence,
le procédé comprenant les étapes suivantes :
l'installation d'une pluralité de coupleurs (C) dans ledit réseau électrique (100),
lesdits coupleurs (C) étant installés de sorte qu'au moins un commutateur (SW) soit présent sur un trajet de communication entre deux coupleurs successifs, et
lesdits deux coupleurs successifs (C) étant un coupleur d'émission et un coupleur de réception,
la transmission d'un signal généré par l'intermédiaire dudit coupleur d'émission sur ledit trajet de communication entre deux coupleurs successifs et le signal possédant une fréquence à laquelle une modification dans la densité spectrale de puissance identifie un état dudit commutateur (SW),
la mesure d'une puissance reçue au niveau dudit coupleur de réception par l'intermédiaire d'un desdits dispositifs de mesure de puissance,
le traitement dudit signal de puissance mesuré reçu au niveau dudit coupleur de réception par l'intermédiaire d'un dispositif de ladite pluralité de dispositifs d'analyse de fréquence,
la dérivation d'informations concernant l'état dudit commutateur (SW) présent sur ledit trajet de communication entre deux coupleurs successifs (C), l'état du commutateur (SW) dans le trajet de communication étant détecté par la mesure de la puissance reçue à des fréquences sous la fréquence du signal transmis, et
l'actualisation d'un modèle de topologie de réseau destiné à une commande de réseau en fonction des informations dérivées concernant l'état du commutateur (SW).

2. Le procédé selon la revendication 1,
dans lequel ledit signal généré par ledit coupleur d'émission comprend un signal de porteuse non modulé ou un signal d'impulsion.

3. Le procédé selon la revendication 1,
dans lequel lesdits coupleurs (C) sont raccordés à un modem de communication de réseau électrique.

4. Le procédé selon la revendication 1,
dans lequel une fréquence dudit signal transmis est telle que le signal est fortement atténué par un commutateur ouvert (SW).

5. Le procédé selon la revendication 1,
dans lequel ledit réseau électrique (100) est formé par un réseau d'énergie électrique.

6. Un modem de communication de réseau électrique, comprenant :
un moyen de détection de modifications de topologie dans des réseaux électriques,
une pluralité de coupleurs (C) étant installés dans ledit réseau électrique (100),
lesdits coupleurs (C) étant installés de sorte qu'au moins un commutateur (SW) soit présent sur un trajet de communication entre deux coupleurs successifs, et
lesdits deux coupleurs successifs étant un coupleur d'émission et un coupleur de réception,
ledit moyen de détection de modifications de topologie étant configuré de façon à exécuter les étapes suivantes :
l'émission d'un signal généré par l'intermédiaire dudit coupleur d'émission sur ledit trajet de communication entre deux coupleurs successifs et le signal possédant une fréquence à laquelle une modification dans la densité spectrale de puissance identifie un état dudit commutateur (SW),
la mesure d'une puissance reçue au niveau dudit coupleur de réception par l'intermédiaire d'un desdits dispositifs de mesure de puissance,
le traitement dudit signal de puissance mesuré reçu au niveau dudit coupleur de réception par l'intermédiaire d'un dispositif de ladite pluralité de dispositifs d'analyse de fréquence,
la dérivation d'informations concernant l'état dudit commutateur (SW) présent sur ledit trajet de communication entre deux coupleurs successifs, l'état du commutateur (SW) dans le trajet de communication étant détecté par la mesure de la puissance reçue à des fréquences sous la fréquence du signal transmis, et
l'actualisation d'un modèle de topologie de réseau destiné à une commande de réseau en fonction des informations dérivées concernant l'état du commutateur (SW).

7. Le modem de communication de réseau électrique selon la revendication 5,
dans lequel lesdits coupleurs comprennent des coupleurs inductifs ou des coupleurs capacitifs.

8. Un programme informatique adapté de façon à exécuter le procédé selon l'une quelconque des revendications 1 à 5.
